# EUROPÄISCHE PATENTSCHRIFT

(11) **EP 0 779 948 B1**
(45) Veröffentlichungstag und Bekanntmachung des Hinweises auf die Patenterteilung: **15.07.1998**
(21) Anmeldenummer: 95927623.9
(22) Anmeldetag: 04.08.1995
(51) Int. Cl.: F02M 37/22

(54) **FLÜSSIGKEITSFILTER MIT EINGEBAUTEM DRUCKREGLER**
LIQUID FILTER WITH INTEGRAL PRESSURE REGULATOR
FILTRE A LIQUIDE A REGULATEUR DE PRESSION INTEGRE

(30) Priorität: 27.08.1994 DE 4430471
(43) Veröffentlichungstag der Anmeldung: 25.06.1997
(73) Patentinhaber: ROBERT BOSCH GMBH, 70442 Stuttgart (DE)
(72) Erfinder: SCHWEGLER, Helmut, D-74385 Pleidelsheim (DE); LISKOW, Uwe, Rok 6381 (KR); DRUTU, Lorenz, D-70806 Kornwestheim (DE); PROJAHN, Ulrich, E-28109 El Soto (ES); LUCAS, Bernhard, E-28034 Madrid (ES); BUESER, Wolfgang, D-71691 Freiberg (DE)
(86) Internationale Anmeldenummer: DE9501013
(87) Internationale Veröffentlichungsnummer: WO9607025

(56) Entgegenhaltungen:
- EP-A- 0 011 189
- EP-A- 0 300 910
- DE-A- 4 242 242
- DE-U- 9 414 297
- FR-A- 2 580 190
- US-A- 4 011 848
- US-A- 5 078 167

## Beschreibung

### Stand der Technik

Die Erfindung geht aus von einem Flüssigkeitsfilter mit eingebautem Druckregler für Kraftstoffe nach der im Oberbegriff des Anspruchs 1 näher angegebenen Gattung.

Es ist schon ein solches Flüssigkeitsfilter mit eingebautem Druckregler für Kraftstoffe aus der US-PS 5 078 167 bekannt, bei der die sonst separaten Bauteile wie Filter und Druckregler in einer gemeinsamen Einheit zusammengefaßt sind und wie sie unter der Bezeichnung Returnless Fuel Systems (RLFS) bekannt sind. Bei diesem Flüssigkeitsfilter arbeitet der Druckregler mit einer Membran, welche von dem zu regelnden Druck am Ablaufanschluß gegen die Kraft einer Feder beaufschlagt ist. Von Nachteil bei diesem Flüssigkeitsfilter ist, daß hier das Filterelement von innen nach außen durchströmt wird, was zu einer beträchtlichen Reduzierung der Standzeit führen kann, da sich infolge von Schmutzablagerungen Brücken bilden können, welche die Eintrittsquerschnitte verkleinern. Besonders kritisch ist dies beim Anfall großer Schmutzmengen zu sehen. Ferner muß hier der Druck von der Reinseite des Filterelements auf eine Seite der Membran zurückgeführt werden, wozu an der Membran eine aufwendige Kammerbildung erforderlich ist. Ferner ist hier ungünstig, daß der Druckregler zwischen Zulaufanschluß und Tankanschluß geschaltet ist und somit also voll auf der Schmutzseite des Filterelements liegt. Dadurch können Schmutzpartikel in das Ventil des Druckreglers gelangen und dessen Funktion beeinträchtigen. Bei diesem Druckregler stellt das eigentliche Ventil ein von der Membran getrenntes Bauteil dar, so daß dieses Flüssigkeitsfilter mit Druckregler eine relativ aufwendige Bauweise ergibt, die auch viele Blechformteile benötigt. Außerdem ist dieses Filter zum Einbau in einen Tank ausgebildet und eignet sich schlecht zum Anschließen mittels Leitungen.

Ferner ist aus der US-PS 4 011 848 ein Flüssigkeitsfilter mit eingebautem Druckregler bekannt, bei dem das Flüssigkeitsfilter im wesentlichen als Leitungsfilter ausgebildet ist, an dessen entgegengesetzt liegenden Stirnseiten des Gehäuses der Zulaufanschluß und der Ablaufanschluß angeordnet sind. Vom Gehäuse geht radial seitlich ein dritter Anschluß zum Tank ab, in dem als Druckregelventil ein einfaches Kugelventil vorgesehen ist. Ferner ist dem Ablaufanschluß ein zusätzliches Sicherungsventil zugeordnet, das bei Ausfall der Kraftstoffversorgung die Verbindung zum Tank absperren soll. Auch bei diesem Flüssigkeitsfilter ist der Druckregler unmittelbar an die Schmutzseite angeschlossen. Der Druckregler arbeitet hier ohne Membrane und ist infolge des verwendeten Kugelventils relativ ungenau und schmutzanfällig. Die zueinander senkrechte Lage der Stutzen für den Ablaufanschluß und den Tankanschluß ist in vielen Einbaufällen sehr ungünstig.

Weiterhin ist aus der DE 42 42 242 A1 eine Vorrichtung zum Versorgen der Brennkraftmaschine eines Kraftfahrzeugs mit in einem Vorratstank vorhandenem Kraftstoff bekannt, bei der mehrere Komponenten zu einem Aggregat zusammengefaßt sind. Dabei ist auch vorgesehen, in einem gemeinsamen Gehäuse ein axial oder radial durchströmtes Filterelement ringförmig und konzentrisch zur Längsachse einer Kraftstofförderpumpe anzuordnen, wobei die Reinseite des Filterelements unmittelbar mit dem Sauganschluß der Kraftstofförderpumpe verbunden ist. Von einem nach außen führenden Druckanschluß der Kraftstofförderpumpe zweigt eine Rohrverbindung ab, an die ein extern am Aggregat-Gehäuse angeordneter, federbelasteter Membran-Druckregler angeschlossen ist, dessen Ablaufseite zur Schmutzseite des Filterelements entlastet ist. Eine Integration des Druckreglers in den Filter selbst ist bei diesem Aggregat nicht vorgesehen.

### Vorteile der Erfindung

Das erfindungsgemäße Flüssigkeitsfilter mit eingebautem Druckregler für Kraftstoffe mit den kennzeichnenden Merkmalen des Hauptanspruchs hat demgegenüber den Vorteil, daß bei dieser Integration des Druckreglers im Flüssigkeitsfilter eine äußerst einfache, kompakte und kostengünstige Bauweise ermöglicht wird. Da der Druckregler nur von der Reinseite her mit Druckmittel beaufschlagt wird, werden alle seine Bauteile nur von gereinigtem Kraftstoff durchflossen, so daß Verschleiß oder Undichtigkeiten aufgrund eingeklemmter Schmutzpartikel ausgeschlossen sind. Zudem läßt sich bei dieser Bauweise erreichen, daß das Filterelement im richtigen Sinn von außen nach innen durchströmt wird und somit gleiche Standzeiten wie bei einem alleinigen Filter erreicht werden. Das Flüssigkeitsfilter mit integriertem Druckregler kann an jedem beliebigen Ort des Fahrzeugs leicht und einfach eingebaut werden; es sind keine zusätzlichen Anschlüsse am Tank notwendig. Die integrierte Bauweise des Druckreglers ermöglicht eine besonders montagefreundliche Konstruktion, die sich wegen ihrer kostengünstigen Bauweise auch für ein Wegwerffilter eignet. Die beim Ansprechen des Druckreglers abströmende Flüssigkeitsmenge kann relativ ungehindert abfließen, wodurch eine kompakte und geringe Baugröße begünstigt wird. Auch die Gefahr von Strömungsgeräuschen und Druckpulsationen wird erheblich reduziert, da der Flüssigkeitsstrom im Unterschied zu bisherigen Druckreglern ohne starke Umlenkungen geführt wird und einen im wesentlichen stetigen Verlauf vom Zulauf zum Ablauf aufweist. In günstiger Weise kompensiert der Druckregler einen eventuellen Druckabfall der durch Zusetzen des Filters entstehen kann, dadurch daß auf der Reinseite geregelt wird.

Durch die in den Unteransprüchen aufgeführten Maßnahmen sind vorteilhafte Weiterbildungen und Verbesserungen des im Hauptanspruch angegebenen Flüssigkeitsfilters mit eingebautem Druckregler möglich. So läßt sich gemäß Anspruch 2 eine besonders einfache Bauweise realisieren. Günstig ist ferner eine Bauweise nach Anspruch 3, was die Herstellung und die Montage dieser Baueinheit vereinfacht. Zweckmäßig ist eine Ausbildung nach Anspruch 4, wodurch die Anschlüsse für Zulauf und Rücklauf sich auf einer Seite des Filters befinden, so daß nur kurze Schlauchverbindungen vom Filter zum Tank erforderlich sind. Eine besonders kompakte und robuste Bauweise läßt sich gemäß Anspruch 5 erreichen. Ferner ist es günstig, wenn gemäß Anspruch 6 der Deckel des Filtergehäuses mit dem Druckregler eine vormontierbare Montagegruppe bildet, wobei der Druckregler auch an dieser Einheit eingestellt werden kann. Weiterhin ist es zweckmäßig, gemäß Anspruch 7 die sonst bei außenliegenden Druckreglern bezüglich der Dichtheit kritische Einspannstelle nun in das Innere des Filtergehäuses zu legen, wobei das Filtergehäuse selbst nach außen hin dicht ist und damit das Dichtheitsproblem erheblich reduziert wird. Gemäß den Ansprüchen 8 bis 10 lassen sich besonders einfache und kompakte Bauweisen erzielen, welche insbesondere eine Bauweise als Wegwerffilter begünstigen. Bei Ausführungen gemäß den Ansprüchen 11 und 13 läßt sich durch die symmetrische Ausführung des Filtereinsatzes erreichen, daß eine gerichtete Montage des Filtereinsatzes entfällt, so daß sich dessen Herstellung einfacher, schneller und kostengünstiger gestaltet. Dabei wird zudem erreicht, daß durch den Preßverband von Filtergehäuse, Filtereinsatz und Deckel immer eine positive Kraft auf die Einspann- bzw. Einbördelstelle der Membrane auftritt, so daß die Gefahr des Auswanderns der Membrane an ihrem äußeren Rand reduziert wird. Bei vorliegendem Flüssigkeitsfilter wirkt sich ferner kostengünstig aus, daß ein Teil des Gehäuses für den Druckregler nun durch den Filterdeckel ersetzt wird, wodurch ein meist aus Edelstahl bestehendes teueres Bauteil entfällt. Das Flüssigkeitsfilter mit integriertem Druckregler ist ferner in vorteilhafter Weise so gestaltet, daß es sich für eine Bauweise aus Aluminium, aus Stahl oder aus Kunststoff eignet. Dabei lassen sich auch die Gehäuseteile lösbar verbinden, so daß das Filterelement für sich allein ausgetauscht werden kann. Weitere vorteilhafte Ausgestaltungen ergeben sich aus den übrigen Ansprüchen, der Beschreibung sowie der Zeichnung.

### Zeichnung

Vier Ausführungsbeispiele der Erfindung sind in der Zeichnung dargestellt und in der nachfolgenden Beschreibung näher erläutert. Es zeigen Figur 1 einen Längsschnitt durch ein erstes Ausführungsbeispiel eines Flüssigkeitsfilters mit eingebautem Druckregler für Kraftstoff in vereinfachter Darstellung, Figur 2 einen Längsschnitt durch ein zweites Ausführungsbeispiel für Kunststoffausführung, Figur 3 einen Längsschnitt durch ein drittes Ausführungsbeispiel mit austauschbarem Filterelement und Figur 4 ein viertes Ausführungsbeispiel in stark vereinfachter Darstellung.

### Beschreibung der Ausführungsbeispiele

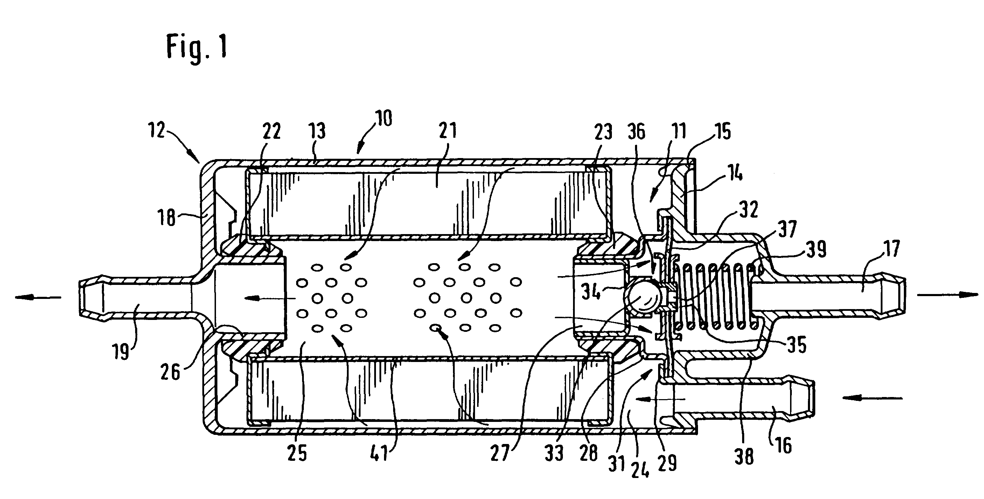

Die Figur 1 zeigt ein Flüssigkeitsfilter 10 mit eingebautem Druckregler 11 für Kraftstoffe, wobei das Flüssigkeitsfilter 10 im wesentlichen als Leitungsfilter ausgeführt ist und der Druckregler 11 deckelseitig integriert ist.

Das Flüssigkeitsfilter 10 weist ein Gehäuse 12 aus Aluminium auf, das im wesentlichen aus einem becherförmigen Gehäuseteil 13 und einem zugehörigen Deckel 14 besteht. Die beiden Gehäuseteile 13, 14 sind an ihrem äußeren Rand 15 miteinander verschweißt, was insbesondere durch Laserschweißung erfolgen kann. An dem Deckel 14 ist ein Zulaufanschluß 16 ausgebildet, über den vom Tank kommender Kraftstoff dem Flüssigkeitsfilter 10 zugeführt wird. Ferner ist am Deckel 14 ein Tankanschluß 17 ausgebildet, über den beim Ansprechen des Druckreglers 11 Kraftstoff zum Tank abfließen kann. Am becherförmigen Gehäuseteil 13 ist an dessen Boden 18 ein Ablaufanschluß 19 vorgesehen, über den gereinigter Kraftstoff das Fllüssigkeitsfilter 10 verläßt und in Richtung Einspritzventile geführt wird. Der Tankanschluß 17 und der Ablaufanschluß 19 liegen koaxial zueinander in der Längsachse des Flüssigkeitsfilters 10, während der dazu achsparallele Zulaufanschluß 16 am Deckel 14 radial nach außen versetzt ist und an dessen äußerem Rand liegt. Alle Anschlüsse 16, 17, 19 sind als Rohrstutzen für Schlauchanschluß ausgebildet.

Im Inneren des Gehäuses 12 ist zwischen dem Zulaufanschluß 16 und dem Ablaufanschluß 19 ein Filterelement 21 geschaltet, das hier als ein an sich bekannter, radial von außen nach innen durchströmter Sterneinsatz ausgebildet ist. Das Filterelement 21 ist an seinen stirnseitigen Endkappen jeweils mit gleichartigen, ringförmigen Formdichtungen 22, 23 ausgebildet, mit deren Hilfe eine Abdichtung zwischen der mit dem Zulaufanschluß 16 verbundenen Schmutzseite 24 und der mit dem Ablaufanschluß 19 verbundenen Reinseite 25 hergestellt wird. Zu diesem Zweck ist am Boden 18 des becherförmigen Gehäuseteils 13 ein nach innen ragender Rohrstutzen 26 ausgebildet, auf dem das Filterelement 21 mit seiner Formdichtung 22 gehaltert ist und dabei für eine Abdichtung sorgt. Mit der anderen Formdichtung 23 sitzt das Filterelement 21 auf einem hülsenförmigen Abschnitt 27 eines Trägerteils 28, das zugleich einen Teil des Druckreglers 11 bildet. Das Filterelement 21 ist symmetrisch ausgebildet und weist unterreinander gleiche Formdichtungen 22, 23 auf, so daß es beliebig im Gehäuse 12 einbaubar ist und keine gerichtete Montage notwendig wird.

Das Trägerteil 28 ist im wesentlichen als rohrförmiges, im Durchmesser mehrfach abgesetztes Teil ausgebildet, das an seinem zum hülsenförmigen Abschnitt 27 entgegengesetzt liegenden Ende in einen ringförmigen Bund 29 ausläuft, mit dem es an der Innenseite des Deckels 14 in einer kreisförmig verlaufenden Einspannstelle 31 befestigt ist. Diese Einspannstelle 31 ist als Bördelstelle ausgebildet und dient zusätzlich dazu, eine kreisförmige Membran 32 des Druckreglers 11 an ihrem äußeren Umfang dicht und fest einzuspannen. Die Einspannstelle 31 übernimmt somit eine Doppelfunktion und weist einen möglichst großen Außendurchmesser auf, so daß gerade noch ausreichend Bauraum für den Zulaufanschluß 16 zur Verfügung steht. Das in der Einspannstelle 31 dicht befestigte Trägerteil 28 sorgt somit zusammen mit der Formdichtung 23 für eine Abdichtung zwischen der Schmutzseite 24 und der Reinseite 25. Das rohrförmige Trägerteil 28 weist in seinem Inneren einen gehäusefest gelagerten Ventilkörper 33 auf, der hier als Kugel ausgebildet ist. Zwischen dem Ventilkörper 33 und dem hülsenförmigen Abschnitt 27 sind ringförmig gleichmäßig verteilte Durchtrittsöffnungen 34 vorgesehen, so daß der Kraftstoff von der Reinseite 25 ungehindert durch diese Durchtrittsöffnungen 34 strömen und die Membran 32 auf ihrer dem Filterelement 32 zugewandten Seite beaufschlagen kann.

In der beweglichen Membran 32 ist zentrisch ein Ventilsitz 35 angeordnet, der mit dem kugeligen Ventilkörper 33 in dem Trägerteil 28 zusammenarbeitet und auf diese Weise das eigentliche Ventil 36 des Druckreglers 11 bildet. Der Ventilsitz 35 selbst hat eine zentrische Öffnung 37, so daß beim Ansprechen des Druckreglers 11 das Ventil 36 öffnet und die Membran 32 innen durchströmt wird. Der Deckel 14 weist im Bereich zwischen der Membran 32 und dem Schlauchstutzen für den Tankanschluß 17 eine nach außen geformte, domförmige Auswölbung 38 aus, die im Inneren des Gehäuses 12 von der Membran 32 überspannt wird. Diese Auswölbung 38 nimmt in ihrem Inneren eine Feder 39 des Druckreglers 11 auf, welche sich einerseits an dem Tankanschluß 17 und andererseits an der Membran 32 abstützt. Die Feder 39 ist in ihrem Durchmesser so groß ausgebildet, daß eine ungehinderte Abströmung des Druckmittels durch den Ventilsitz 35 hindurch zum Tankanschluß 17 stattfinden kann.

Die Wirkungsweise des Flüssigkeitsfilters 10 mit integriertem Druckregler 11 wird wie folgt erläutert:

Der in der Regel von einem Tank kommende Kraftstoff wird dem Flüssigkeitsfilter 10 über den Zulaufanschluß 16 zugeführt und gelangt im Inneren des Gehäuses 12 auf dessen Schmutzseite 24. Der Kraftstoff durchströmt radial von außen nach innen das Filterelement 21 und gelangt gereinigt auf die Reinseite 25, die im wesentlichen vom Mittelrohr 41 des Filterelements 21 begrenzt wird und strömt von dort zumindest teilweise über den Ablaufanschluß 19 in Richtung der Verbraucher, die im vorliegenden Fall Einspritzventile sind. Der auf der Reinseite 25 herrschende Druck wirkt über die Durchtrittsöffnungen 34 im Trägerteil 28 auch stromaufwärts vom Ventil 36 auf die dem Filterelement 21 zugewandte Seite der Membran 32, welche in entgegengesetzter Richtung von der Feder 39 belastet wird. Über die Feder 39 wird dabei ein bestimmter Druck voreingestellt. Wird dieser voreingestellte Druck im Druckregler 11 überschritten, so öffnet das Ventil 36 und Kraftstoff kann von der Reinseite 25 über das geöffnete Ventil 36 und die Öffnung 37 im Ventilsitz 35 hindurchströmen und ungehindert von der Feder 39 über den Tankanschluß 17 zum Tank abströmen. Beim Öffnen des Ventils 36 hebt der in der Membran 32 beweglich gelagerte Ventilsitz 37 von dem gehäusefest gelagerten, kugeligen Ventilkörper 33 ab. Da der Druckregler 11 nur noch von der Reinseite 25 her beaufschlagt wird, werden alle seine Bauteile nur von gereinigtem Kraftstoff durchflossen und somit Verschleiß oder Undichtigkeiten aufgrund von Schmutzpartikeln ausgeschlossen. Zugleich ist durch die deckelseitige Integration des Druckreglers 11 gewährleistet, daß das Filterelement 21 radial von außen nach innen durchströmt wird und somit höhere Standzeiten erreichbar sind, als dies bei umgekehrter Strömungsrichtung der Fall wäre. Durch die Ausbildung aller Anschlußstutzen 16, 17, 19 am Gehäuse 12, insbesondere in axialer Richtung, läßt sich das Flüssigkeitsfilter 10 an jedem beliebigen Ort eines Fahrzeugs einbauen, wobei der Einbauaufwand relativ gering gehalten wird. Der Deckel 14 bildet mit dem integrierten Druckregler 11 eine vormontierbare Montagegruppe, die leicht handhabbar und montierbar ist und bei der auch der Druckregler 11 eingestellt werden kann. Durch die Lage der Einspannstelle 31 für die Membran 32 im Inneren des Gehäuses 12 entfällt somit eine Abdichtung nach außen hin, so daß das Dichtheitsproblem, vor allem im Hinblick auf Sicherheitsaspekte, erheblich reduziert ist. Die Ausbildung von Tankanschluß 17 und Zulaufanschluß 16 an der gleichen Stirnseite des Gehäuses gewährleistet, daß nur relativ kurze Schlauchverbindungen vom Flüssigkeitsfilter 10 zum Tank erforderlich sind. Die deckelseitige Integration des Druckreglers 11 ermöglicht eine äußerst kompakte, einfache und kostengünstige Bauweise, zumal der Deckel 14 Abdichtfunktionen sowohl für das Flüssigkeitsfilter 10 wie auch für den Druckregler 11 übernimmt. Da nun die Korrosionsanforderungen an den Druckregler 11 wegen den nun innen angebrachten Bauteilen erheblich reduziert sind, und zudem das Flüssigkeitsfilter 10 als Wegwerfteil konzipiert ist, können einfachere Materialien bei der Herstellung verwendet werden. So kann insbesondere verzinkter oder chromatierter Stahl verwendet werden. Weiterhin hat diese Bauweise des Flüssigkeitsfilters 10 mit Druckregler 11 den Vorteil, daß durch den Preßverband von Gehäuse 12, Filterelement 21 und Deckel 14 eine Art Preßverband erzielt wird, wobei immer eine positive Kraft auf die gebördelte Einspannstelle 31 ausgeübt wird, so daß die Gefahr des Auswanderns der Membran 32 reduziert wird.

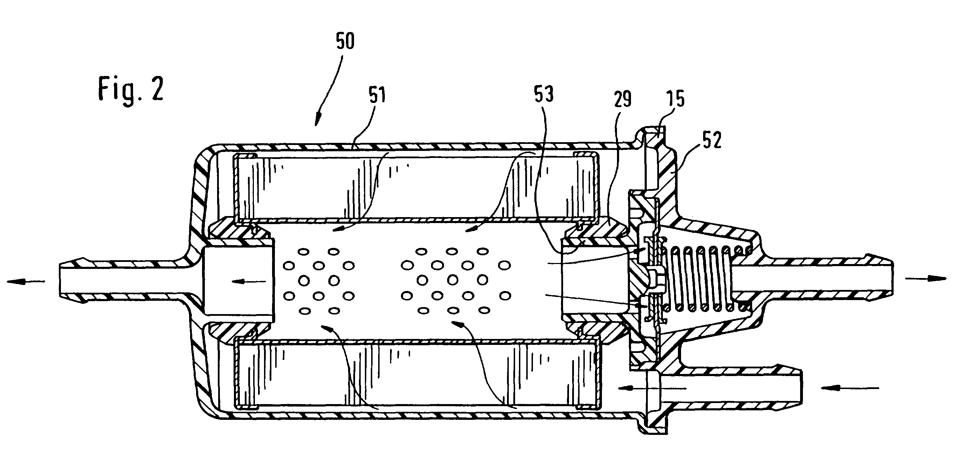

Die Figur 2 zeigt einen Längsschnitt durch ein zweites Flüssigkeisfilter 50, das sich von dem Flüssigkeitsfilter 10 nach Figur 1 wie folgt unterscheidet, wobei für gleiche Bauelemente gleiche Bezugszeichen verwendet werden.

Im Unterschied zum ersten Flüssigkeitsfilter 10 in Aluminiumbauweise weist das zweite Flüssigkeitsfilter 50 ein becherförmiges Gehäuseteil 51, einen Deckel 52 sowie ein Trägerteil 53 auf, die alle als Kunststoffteile ausgeführt sind. Das Gehäuseteil 51 und der Deckel 52 können an ihrem Rand 15 durch Ultraschall- oder Reibschweißen dicht und fest miteinander verbunden werden. In entsprechender Weise kann der Bund 29 des Trägerteils 53 mit dem Deckel 52 fest zusammengefügt werden. Die Wirkungsweise des zweiten Flüssigkeitsfilters 50 entspricht derjenigen des ersten Flüssigkeitsfilters 10 nach Figur 1.

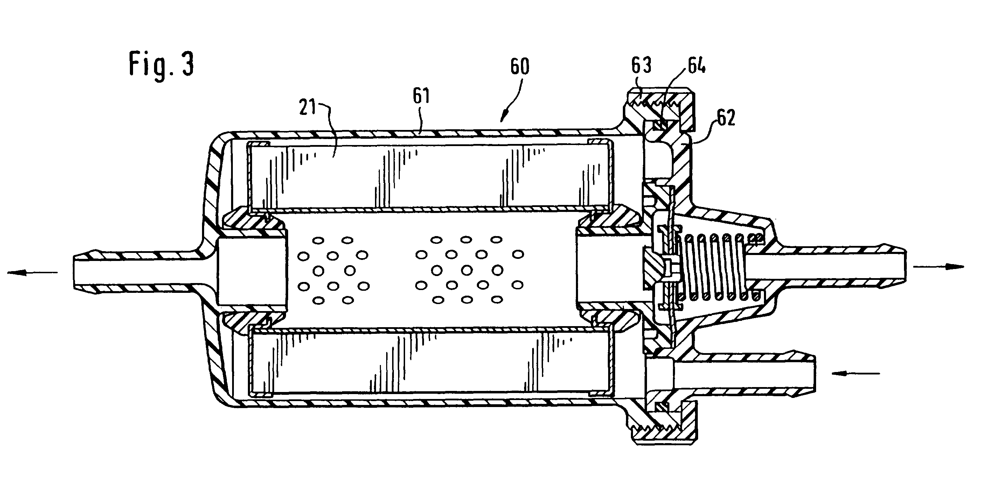

Die Figur 3 zeigt einen Längsschnitt durch ein drittes Flüssigkeitsfilter 60, das sich vom zweiten Flüssigkeitsfilter 50 nach Figur 2 wie folgt unterscheidet, wobei für gleiche Bauelemente gleiche Bezugszeichen verwendet werden. Beim dritten Flüssigkeitsfilter 60 sind das becherförmige Gehäuseteil 61 und der Deckel 62 mit Hilfe einer Überwurfmutter 63 lösbar miteinander verbunden. Die Abdichtung zwischen Gehäuseteil 61 und Deckel 62 übernimmt dabei ein O-Ring 64. Beim dritten Flüssigkeitsfilter 60 ist ein Wechsel des Filterelements 21 allein möglich. Zum Wechsel des Filterelements 21 wird die Überwurfmutter 63 geöffnet, der Deckel 62 abgenommen und das Filterelement 21 ausgestauscht. Auch hier kann das Gehäuse 61, 62 in Kunststoffbauweise ausgeführt werden. Im übrigen entspricht die Wirkungsweise des dritten Flüssigkeitsfilters 60 mit Druckregler 11 derjenigen des ersten Flüssigkeitsfilters 10.

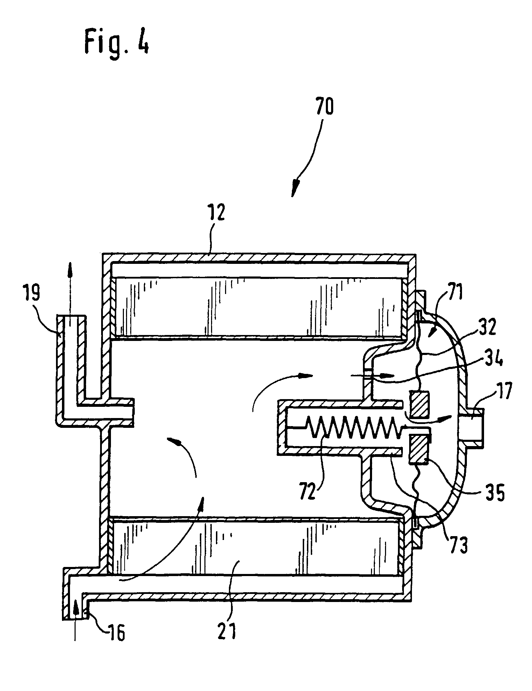

Die Figur 4 zeigt einen Längsschnitt durch ein viertes Flüssigkeitsfilter 70 in stark vereinfachter Darstellung, das sich von dem ersten Flüssigkeitsfilter 10 prinzipiell wie folgt unterscheidet, wobei für gleiche Bauelemente gleiche Bezugszeichen verwendet werden.

Das vierte Flüssigkeitsfilter 70 verwendet einen anderen Druckregler 71, bei dem anstelle der bisherigen Druckfeder 39 nun eine Zugfeder 72 verwendet wird. Auf diese Weise kann die Lage der Zugfeder 72 mehr in den Bauraum des Filterelements 21 hineinverlegt werden. Der dem beweglichen Ventilsitz 35 in der Membran 32 zugeordnete, gehäusefeste Ventilkörper 33 ist hier nun als ringförmiger Sitz 73 ausgebildet. Beim vierten Flüssigkeitsfilter 70 läßt sich der Raumbedarf noch weiter verringern.

Selbstverständlich sind an den gezeigten Ausführungsbeispielen Änderungen möglich, ohne vom Gedanken der Erfindung abzuweichen. Das Flüssigkeitsfilter 10 mit integriertem Druckregler 11 läßt sich ohne weiteres so ausgestalten, daß es neben einer Bauweise aus Aluminium, Stahl und Kunststoff auch eine Bauweise mit gemischten Werkstoffen ermöglicht. Die Lage des Zulaufstutzens 16 kann bei Bedarf auch an die andere Stirnseite des Gehäuses verlegt werden. Die Integration des Druckreglers mit seiner innen durchströmten Membran auf der Innenseite des Gehäuse-Deckels stellt eine besonders vorteilhafte Kombination dar.

## Patentansprüche

1. Flüssigkeitsfilter (10, 50, 60, 70) mit eingebautem Druckregler (11, 71) für Kraftstoff und mit einem Gehäuse (12; 51, 52; 61, 62), in dem ein Filterelement (21) angeordnet ist, das zwischen einen mit einer Schmutzseite (24) verbundenen Zulaufanschluß (16) und einen mit der Reinseite (25) des Filters verbundenen Ablaufanschluß (19) geschaltet ist, wobei an dem Gehäuse neben dem Zulauf(16) und Ablaufanschluß (19) ein Tankanschluß (17) ausgebildet ist, über welchen beim Ansprechen des Druckreglers (11, 71) über dessen Ventil (36) strömende Flüssigkeit abströmt und mit einer dem Druckregler (11, 71) zugeordneten Membran (32) die von einem Flüssigkeitsdruck entgegen einer Feder (39, 72) belastet ist und davon abhängig das Ventil (36) des Druckreglers (11, 71) steuert, dadurch gekennzeichnet, daß der Druckregler (11, 71) zwischen die Reinseite(25) des Flüssigkeitsfilters (10, 50, 60, 70) und den Tankanschluß (17) geschaltet ist und daß die Membran (32) so ausgebildet und angeordnet ist, daß sie von dem zum Tankanschluß (17) abfließenden Flüssigkeitsstrom innen durchströmt wird.

2. Flüssigkeitsfilter nach Anspruch 1, dadurch gekennzeichnet, daß die Membran (32) das bewegliche Ventilglied (33, 35) des Druckregler-Ventils (36) bildet und die Verbindung von der Reinseite (25) zum Tankanschluß (17) steuert.

3. Flüssigkeitsfilter nach Anspruch 1 oder 2, dadurch gekennzeichnet, daß der Druckregler (11) und der Tankanschluß (17) am gleichen Gehäusebauteil (14) angeordnet sind.

4. Flüssigkeitsfilter nach Anspruch 3, dadurch gekennzeichnet, daß an dem den Tankanschluß (17) aufweisenden Gehäusebauteil (14) auch der Zulaufanschluß (16) angeordnet ist.

5. Flüssigkeitsfilter nach einem der Ansprüche 1 bis 4, dadurch gekennzeichnet, daß die Membran (32) einen zentrisch angeordneten, ringförmigen Ventilsitz (35) aufweist, der mit einem gehäusefesten Ventilkörper (33) zusammenarbeitet, welche zusammen das Ventil (36) des Druckreglers (11) bilden.

6. Flüssigkeitfilter nach einem oder mehreren der Ansprüche 1 bis 5, dadurch gekennzeichnet, daß der Druckregler (11) und der Tankanschluß (17) koaxial zueinander an einem Deckel (14) angeordnet sind, welcher Deckel (14) in einem becherförmigen Gehäuseteil (13) befestigbar ist.

7. Flüssigkeitsfilter nach einem oder mehreren der Ansprüche 1 bis 6, dadurch gekennzeichnet, daß die Einspannstelle (31) der vorzugsweise kreisförmigen Membran (32) an ihrem Außenumfang an der Innenwand des Gehäuses (12), insbesondere am Deckel (14), angeordnet ist.

8. Flüssigkeitsfilter nach einem oder mehreren der Ansprüche 1 bis 7, dadurch gekennzeichnet, daß der Druckregler (11) ein im wesentlichen rohrförmiges Trägerteil (28) aufweist, das einerseits mit einem Ende (29) am Deckel (14) dicht befestigt ist und an dessem anderen Ende (27) über eine hülsenförmige Formdichtung (23) das Filterelement (21) dicht gelagert ist.

9. Flüssigkeitfilter nach Anspruch 8, dadurch gekennzeichnet, daß in dem rohrförmigen Trägerteil (28) ein gehäusefester Ventilkörper (33) angeordnet ist, der zusammen mit dem beweglichen Ventilsitz (35) in der Membran (32) das Ventil (36) bildet und daß im Trägerteil (28) Durchtrittsöffnungen (34) vorgesehen sind, über welche Flüssigkeit von der Reinseite (25) des Filterelements (21) die Membran (32) auf ihrer stromaufwärts vom Ventil (36) liegenden Seite beaufschlagen kann.

10. Flüssigkeitsfilter nach Anspruch 8 oder 9, dadurch gekennzeichnet, daß das Trägerteil (28) zusammen mit dem Außenrand der Membran (32) in der Einspannstelle (31) dicht befestigt ist.

11. Flüssigkeitsfilter nach einem der Ansprüche 6 bis 10, dadurch gekennzeichnet, daß das becherförmige Gehäuseteil (13) an seinem Boden (18) einen nach innen ragenden Rohrstutzen (26) aufweist, auf dem über eine Formdichtung (22) das Filterelement (21) dicht befestigt ist, wobei das Filterelement (21) insbesondere symmetrisch ausgebildet ist.

12. Flüssigkeitsfilter nach einem oder mehreren der Ansprüche 1 bis 11, dadurch gekennzeichnet, daß das Filterelement (21) radial von außen nach innen durchströmt wird.

13. Flüssigkeitfilter nach einem der Ansprüche 1 bis 12, dadurch gekennzeichnet, daß der Ablaufanschluß (19) und der Tankanschluß (17) jeweils an einem der beiden Gehäuseteile (13, 14) koaxial zueinander angeordnet sind.

14. Flüssigkeitsfilter nach Anspruch 13, dadurch gekennzeichnet, daß der Zulaufanschluß (16) am Deckel (14) angeordnet ist und insbesondere einen zum Tankanschluß (17) achsparallelen Stutzen hat, der am Deckel (14) radial außerhalb der Einspannstelle (31) liegt.

15. Flüssigkeitsfilter nach einem der Ansprüche 6 bis 14, dadurch gekennzeichnet, daß die Gehäuseteile (13, 14) aus Metall oder Kunststoff bestehen und unlösbar miteinander verbunden sind.

16. Flüssigkeitsfilter nach einem oder mehreren der Ansprüche 6 bis 15, dadurch gekennzeichnet, daß der Tankanschluß (17) an einer nach außen ragenden, domförmigen Auswölbung (38) des Deckels (14) angeordnet ist, die im Gehäuse-Inneren von der Membran (32) überspannt wird und die einen Federraum begrenzt, in dem die Feder (39) angeordnet ist und sich zwischen Membran (32) und Tankanschluß (17) abstützt.

17. Flüssigkeitsfilter nach einem der Ansprüche 6 bis 14 oder 16, dadurch gekennzeichnet, daß die Gehäuseteile (13, 14) mittels einer Überwurfmutter (63) lösbar verbunden sind und insbesondere der Druckregler (11) unlösbar am Deckel (62) befestigt ist.

## Claims

1. Liquid filter (10, 50, 60, 70) with built-in pressure regulator (11, 71) for fuel and with a housing (12; 51, 52; 61, 62), in which is arranged a filter element (21) which is inserted between an inflow junction (16), connected to a dirty side (24), and an outflow junction (19) connected to the clean side (25) of the filter, the housing having designed on it, in addition to the inflow junction (16) and outflow junction (19), a tank junction (17), via which liquid flowing via the valve (36) of the pressure regulator (11, 71) flows out when the latter responds, and with a diaphragm (32) which is assigned to the pressure regulator (11, 71) and which is loaded by a liquid pressure countered to a spring (39, 72) and controls the valve (36) of the regulator (11, 71) as a function of the said pressure, characterized in that the pressure regulator (11, 71) is inserted between the clean side (25) of the liquid filter (10, 50, 60, 70) and the tank junction (17), and in that the diaphragm (32) is designed and arranged in such a way that the liquid stream flowing out to the tank junction (17) flows through the said diaphragm internally.

2. Liquid filter according to Claim 1, characterized in that the diaphragm (32) forms the moveable valve member (33, 35) of the pressure regulator valve (36) and controls the connection from the clean side (25) to the tank junction (17).

3. Liquid filter according to Claim 1 or 2, characterized in that the pressure regulator (11) and the tank junction (17) are arranged on the same housing component (14).

4. Liquid filter according to Claim 3, characterized in that the inflow junction (16) is also arranged on the housing component (14) having the tank junction (17).

5. Liquid filter according to one of Claims 1 to 4, characterized in that the diaphragm (32) has a centrally arranged annular valve seat (35) which cooperates with a valve body (33) fixed to the housing, the valve seat and the valve body together forming the valve (36) of the pressure regulator (11).

6. Liquid filter according to one or more of Claims 1 to 5, characterized in that the pressure regulator (11) and the tank junction (17) are arranged coaxially to one another on a cover (14), the said cover (14) being capable of being fastened in a bowl-shaped housing part (13).

7. Liquid filter according to one or more of Claims 1 to 6, characterized in that the clamping point (31) of the preferably circular diaphragm (32) on its outer circumference is arranged on the inner wall of the housing (12), in particular on the cover (14).

8. Liquid filter according to one or more of Claims 1 to 7, characterized in that the pressure regulator (11) has an essentially tubular carrier part (28) which, on the one hand, at one end (29) is sealingly fastened to the cover (14) and, on its other end (27), the filter element (21) is sealingly mounted via a sleeve-shaped moulded gasket (23).

9. Liquid filter according to Claim 8, characterized in that there is arranged in the tubular carrier part (28) a valve body (33) which is fixed to the housing and which, together with the moveable valve seat (35) in the diaphragm (32), forms the valve (36), and in that there are provided in the carrier part (28) passage orifices (34), via which liquid from the clean side (25) of the filter element (21) can act on the diaphragm (32) on its side located upstream of the valve (36).

10. Liquid filter according to Claim 8 or 9, characterized in that the carrier part (28), together with the outer edge of the diaphragm (32), is sealingly fastened at the clamping point (31).

11. Liquid filter according to one of Claims 6 to 10, characterized in that the bowl-shaped housing part (13) has on its bottom (18) an inwardly projecting tubular nipple (26), on which the filter element (21) is sealingly fastened via a moulded gasket (22), the filter element (21) being, in particular, designed symmetrically.

12. Liquid filter according to one or more of Claims 1 to 11, characterized in that the flow passes through the filter element (21) radially from the outside inwards.

13. Liquid filter according to one of Claims 1 to 12, characterized in that the outflow junction (19) and the tank junction (17) are arranged coaxially to one another in each case on one of the two housing parts (13, 14).

14. Liquid filter according to Claim 13, characterized in that the inflow junction (16) is arranged on the cover (14) and, in particular, has a nipple which is axis-parallel to the tank junction (17) and which is located on the cover (14) radially outside the clamping point (31).

15. Liquid filter according to one of Claims 6 to 14, characterized in that the housing parts (13, 14) consist of metal or plastic and are connected unreleasably to one another.

16. Liquid filter according to one or more of Claims 6 to 15, characterized in that the tank junction (17) is arranged on an outwardly projecting dome-shaped bulge (38) of the cover (14), the said bulge being spanned by the diaphragm (32) in the housing interior and delimiting a spring space, in which the spring (39) is arranged and is supported between the diaphragm (32) and tank junction (17).

17. Liquid filter according to one of Claims 6 to 14 or 16, characterized in that the housing parts (13, 14) are connected releasably by means of a union nut (63) and, in particular, the pressure regulator (11) is fastened unreleasably to the cover (62).

## Revendications

1. Filtre à liquide (10, 50, 60, 70) à régulateur de pression (11, 71) intégré pour du carburant, comprenant un boîtier (12 ; 51, 52 ; 61, 62) logeant un élément de filtre (21) placé entre un ajutage d'entrée (16) relié au côté du liquide non filtré (24) et un ajutage de sortie (19) relié au côté du liquide filtré (25),
le boîtier comportant en plus de l'ajutage d'entrée (16) et de l'ajutage de sortie (19), un ajutage de réservoir (17) par lequel s'échappe le liquide à travers la soupape (36) lorsque le régulateur de pression (11, 71) est mis en oeuvre, et une membrane (32) associée au régulateur de pression (11, 71), et chargée par un ressort (39, 72) agissant contre la pression exercée par le liquide, et commandant en fonction de cela, la soupape (36) du régulateur de pression (11, 71),
caractérisé en ce que
le régulateur de pression (11, 71) est branché entre le côté du liquide filtré (25) du filtre (10, 50, 60, 70) et le branchement de réservoir (17) et,
la membrane (32) est réalisée et montée pour être traversée par l'intérieur, par le flux de liquide allant vers le réservoir (17).

2. Filtre à liquide selon la revendication 1,
caractérisé en ce que
la membrane (32) forme l'organe de soupape (33, 35) mobile de la soupape (36) du régulateur de pression et commande la liaison entre le côté du liquide filtré (25) et le branchement (17) vers le réservoir.

3. Filtre à liquide selon la revendication 1 ou 2,
caractérisé en ce que
le régulateur de pression (11) et le branchement de réservoir (17) sont prévus sur la même pièce (14) du boîtier.

4. Filtre à liquide selon la revendication 4,
caractérisé en ce que
l'ajutage d'arrivée (16) est également prévu sur la partie de boîtier (14) munie de l'ajutage de réservoir (17).

5. Filtre à liquide selon l'une des revendications 1 à 4,
caractérisé en ce que
la membrane (32) comporte un siège de soupape (35) annulaire, central, coopérant avec un corps de soupape (33) solidaire du boîtier, ces deux moyens composant la soupape (36) du régulateur de pression (11).

6. Filtre à liquide selon l'une ou plusieurs des revendications 1 à 5,
caractérisé en ce que
le régulateur de pression (11) et l'ajutage de réservoir (17) sont prévus coaxialement sur le couvercle (14) et ce couvercle (14) est fixé dans une partie de boîtier (13) en forme de gobelet.

7. Filtre à liquide selon l'une ou plusieurs des revendications 1 à 6,
caractérisé en ce que
le point de serrage (31) de la membrane (32) de préférence circulaire au niveau de sa périphérie extérieure est prévu sur la paroi intérieure du boîtier (12) en particulier au niveau du couvercle (14).

8. Filtre à liquide selon l'une ou plusieurs des revendications 1 à 7,
caractérisé en ce que
le régulateur de pression (11) comporte une partie de support (28) essentiellement tubulaire, fixée par une extrémité à une extrémité (29) sur le couvercle (14), de manière étanche et dont l'autre extrémité (27) est combinée par un joint moulé (23), en forme de manchon pour l'élément de filtre (21).

9. Filtre à liquide selon la revendication 8,
caractérisé par
un corps de soupape (33) solidaire du boîtier logé dans la pièce de support (28) tubulaire, ce corps de soupape formant avec le siège de soupape (35), mobile de la membrane (32), la soupape (36) et,
des orifices de passage (34) sont prévus dans la pièce de support (28) par lesquels le liquide peut passer du côté du liquide filtré (25) de l'élément de filtre (21) à travers la membrane (32) et solliciter son côté amont par rapport à la soupape (36).

10. Filtre à liquide selon la revendication 8 ou 9,
caractérisé en ce que
la pièce de support (28) est fixée de manière étanche dans le point de serrage (31) avec le bord extérieur de la membrane (32).

11. Filtre à liquide selon l'une des revendications 6 à 10,
caractérisé en ce que
la partie de boîtier (13) en forme de gobelet présente au niveau de son fond (18) un ajutage tubulaire (26) tourné vers l'intérieur, sur lequel l'élément de filtre (21) est fixé de manière étanche par l'intermédiaire d'un joint moulé (22) et l'élément de filtre (21) est en particulier symétrique.

12. Filtre à liquide selon l'une ou plusieurs des revendications 1 à 11,
caractérisé en ce que
l'élément de filtre (21) est traversé radialement de l'extérieur vers l'intérieur.

13. Filtre à liquide selon l'une des revendications 1 à 12,
caractérisé en ce que
l'ajutage de sortie (19) et l'ajutage de réservoir (17) sont montés coaxialement chaque fois sur l'une des deux parties de boîtier (13, 14).

14. Filtre à liquide selon la revendication 13,
caractérisé en ce que
l'ajutage d'entrée (16) est prévu sur le couvercle (14) et possède notamment un ajutage d'axe parallèle à l'ajutage de réservoir (17), qui se trouve sur le couvercle (14), radialement à l'extérieur du point de serrage (31).

15. Filtre à liquide selon l'une des revendications 6 à 14,
caractérisé en ce que
les parties de boîtier (13, 14) sont en métal ou en matière plastique et sont reliées solidairement.

16. Filtre à liquide selon l'une ou plusieurs des revendications 6 à 15,
caractérisé en ce que
l'ajutage de réservoir (17) est prévu sur une partie bombée (38) en forme de dôme, en saillie vers l'extérieur du couvercle (17), recouverte du côté intérieur du boîtier par la membrane (32) et qui délimite une chambre à ressort logeant le ressort (39) qui s'appuie entre la membrane (32) et l'ajutage de réservoir (17).

17. Filtre à liquide selon l'une des revendications 6 à 14 ou 16 ,
caractérisé en ce que
les parties de boîtier (13, 14) sont reliées de manière amovible par un écrou-chapeau (63) et le régulateur de pression (11) est notamment fixé de manière solidaire au couvercle (62).
